# FASCICULE DE BREVET EUROPEEN

(11) **EP 2 854 367 B1**
(45) Date de publication et mention de la délivrance du brevet: **11.09.2019**
(21) Numéro de dépôt: 14186873.7
(22) Date de dépôt: 29.09.2014
(51) Int. Cl.: H04L 29/06, H04L 12/28

(54) **Procédé de traitement d'une requête de livraison d'un flux de données, procédé de gestion de ressources de livraison, dispositifs et programme d'ordinateur associés**
Verarbeitungsverfahren einer Lieferanfrage eines Datenflusses, Verwaltungsverfahren der Lieferressourcen, entsprechende Vorrichtungen und entsprechendes Computerprogramm
Method for processing a request to deliver a stream of data, method for managing delivery resources, related devices and computer program

(30) Priorité: 30.09.2013 FR 1359389
(43) Date de publication de la demande: 01.04.2015
(73) Titulaire: Orange, 75015 Paris (FR)
(72) Inventeur: Mory, Emmanuel, 35830 BETTON (FR); Houze, Patrice, 35000 RENNES (FR)
(74) Mandataire: Delumeau, François Guy

(56) Documents cités:
- WO-A1-2013/117211
- US-A1- 2012 284 370
- US-A1- 2013 013 799
- US-A1- 2013 212 275

## Description

### 1. Domaine de l'invention

Le domaine de l'invention est celui des télécommunications, et plus particulièrement celui de la livraison d'un flux de données à un terminai d'utilisateur connecté à un réseau de télécommunications IP.

Aujourd'hui, un client abonné d'un opérateur de télécommunications bénéficie d'un accès au réseau internet, par exemple de type DSL, qui dispose d'une bande passante, c'est-à-dire d'un débit limité.
Ce débit peut s'avérer insuffisant pour certaines opérations de transfert de données, en particulier lorsque le client requiert une livraison d'un flux de données multimédia volumineux. Il en résulte une durée d'attente parfois prohibitive pour le téléchargement, voire un échec de la livraison pour le streaming.

On connait de la demande de brevet américain publiée sous le numéro US2013/0013799, un procédé de transmission de contenu multimédia par un « home media server » qui génère des segments de contenus et les stocke sous forme de fichiers au format « adaptive streaming », à destination d'un terminal utilisateur client, connecté au réseau « home ». Le terminal sélectionne les segments de contenus, en fonction des conditions de transmission du lien avec le « home media server », et en requiert l'accès par exemple via le protocole UPNP.

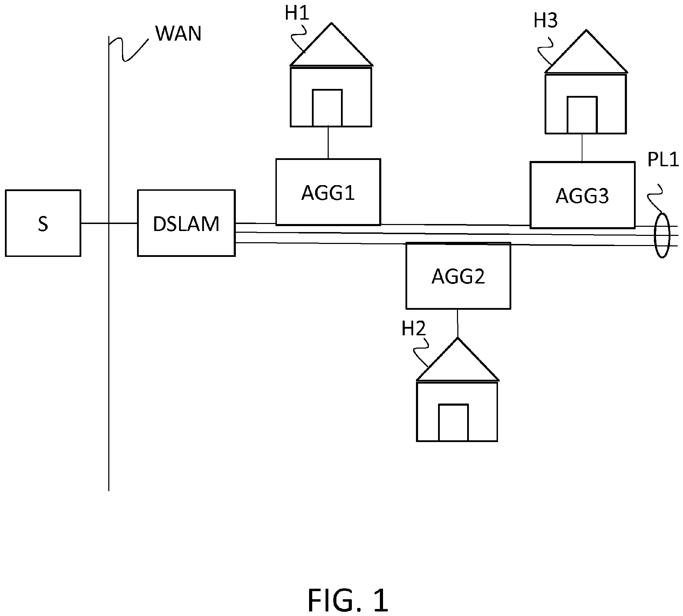

On connaît de la demande de brevet publiée US20060023756, un système d'agrégation physique de lignes DSL connectées à un réseau de télécommunications d'un opérateur. En relation avec la Figure 1, on considère une pluralité de clients H1, H2, H3 abonnés à un réseau d'accès WAN (pour « Wide Area Network », en anglais) à un réseau IP d'un opérateur. Chaque client H1, H2, H3 est connecté au réseau WAN par l'intermédiaire d'un équipement de type DSLAM (pour « Digital Subscriber Line Access Multiplexer », en anglais) dans le cas où une technique de type x-DSL est utilisée (DSL pour « Digital Subscriber Line », en anglais) et relié à cet équipement DSLAM par une ligne x-DSL Li avec i entier.
Ce système comprend des équipements agrégateurs AG1, AG2, AG3 aptes à agréger la pluralité L1, L2, L3 de lignes ADSL au niveau du routage ADSL. Ceci permet de mettre à disposition d'un client Hi l'intégralité de la bande passante descendante cumulée offerte par la pluralité de lignes L1, L2 et L3.

### 3. Inconvénients de l'art antérieur

Un inconvénient d'une telle solution est qu'elle nécessite une modification physique du réseau de télécommunications de l'opérateur. Elle est donc coûteuse. De plus, elle est très difficilement adaptative.

En effet, l'opérateur intervient sur son réseau pour répondre à un besoin local d'un ou plusieurs clients. Si ce besoin disparaît et qu'un nouveau besoin apparaît sur une autre zone du réseau, une autre intervention est nécessaire.

### 4. Exposé de l'invention

L'invention vient améliorer la situation à l'aide d'un procédé de traitement d'une requête de livraison émise par un terminal d'utilisateur d'au moins un flux de données à destination d'un serveur distant connecté à un réseau de télécommunications, ledit terminal étant connecté audit réseau de télécommunications par l'intermédiaire d'un premier équipement d'accès.

Selon l'invention, ledit procédé comprend les étapes suivantes de :
- réception de ladite requête de livraison dudit au moins un flux;
- obtention d'au moins une offre de mise à disposition de ressources en provenance d'un premier réseau local, dit réseau de partage, connectant ledit premier équipement d'accès à au moins un deuxième équipement d'accès au réseau de télécommunications ;
- détermination d'au moins une portion dudit flux en fonction de ladite au moins une offre reçue ;
- émission d'au moins une commande de livraison de ladite au moins une portion dudit flux à destination du réseau de partage ;
- sur réception de ladite au moins une portion, retransmission de ladite au moins une portion au terminal d'utilisateur.

Selon l'invention, l'équipement d'accès qui émet une requête de livraison d'un flux de données à destination d'un serveur distant, bénéficie non seulement de l'accès auquel son utilisateur a droit en tant qu'abonné de l'opérateur du réseau de télécommunications, mais aussi des ressources mises à disposition par des équipements d'accès voisins connectés au même réseau local de partage.

L'invention repose sur une approche tout à fait nouvelle et inventive du partage des ressources d'accès à un réseau de télécommunications opéré, qui ne s'appuie pas sur une agrégation physique de lignes ADSL, mais sur la mise en place de façon ad-hoc et applicative d'un réseau local de partage entre une pluralité d'équipements d'accès voisins.

L'invention permet ainsi de résoudre le problème technique de la mise à disposition d'un utilisateur abonné de ressources d'accès à un réseau de télécommunications de façon flexible et adaptée à ses besoins et sans nécessiter d'intervention physique de l'opérateur.

Selon un aspect de l'invention, le procédé comprend une étape d'émission d'une requête de mise à disposition de ressources à destination du réseau de partage et l'étape d'obtention comprend la réception d'au moins une réponse à ladite requête en provenance du réseau de partage, ladite au moins une réponse comprenant ladite au moins une offre de mise à disposition de ressources.

Un avantage de ce mode de réalisation, dit en mode pull, est que le premier équipement d'accès ne sollicite ses voisins et ne reçoit des offres de mise à disposition de ressources de leur part que lorsqu'il a exprimé un besoin.

Selon un aspect de l'invention :
- ladite requête de mise à disposition de ressources comprend un identifiant du flux de données ;
- ladite au moins une offre de mise à disposition de ressources comprend une offre de livraison au premier équipement d'accès d'au moins une portion du flux de données disponible dans le réseau local;
- ladite au moins une commande de livraison comprend une commande de livraison par le réseau de partage de ladite au moins une portion du flux au premier équipement d'accès.

Lorsque l'un des équipements d'accès voisins, connecté au réseau de partage dispose d'au moins une portion du flux de données requis par l'utilisateur, le réseau de partage la livre au premier équipement d'accès. Un avantage est que le terminal d'utilisateur n'a pas à interroger le serveur distant ni à utiliser son propre canal d'accès au réseau de l'opérateur. Les ressources de bande passante sont ainsi préservées. Un autre avantage pour le terminal d'utilisateur est qu'il reçoit le flux de données dans un délai plus bref.

Avantageusement, lorsque la portion de flux est stockée dans le réseau de partage, elle est retransmise sans délai au premier équipement d'accès.

Selon une variante, lorsque la portion de flux est en cours de livraison à un deuxième équipement d'accès connecté au réseau de partage, elle est retransmise au premier équipement d'accès au fur et à mesure de sa livraison.

Selon un autre aspect de l'invention :
- l'offre de mise à disposition de ressources comprend des informations relatives à la mise à disposition d'une quantité de bande passante au premier équipement par le réseau de partage ;
- ladite au moins une commande de livraison comprend une commande d'envoi au serveur distant d'une requête de livraison de ladite au moins une portion du flux par le réseau de partage et de retransmission de ladite au moins une portion livrée au premier équipement d'accès.

Le réseau de partage transmet au premier équipement d'accès au réseau de télécommunication des offres de mise à disposition de bande passante, soit en mode pull, soit en mode push. Le premier équipement d'accès détermine ensuite les portions du flux de données à commander en fonction des offres de mise à disposition de ressources reçues.
Un avantage est de permettre au premier équipement d'organiser à sa guise la répartition de l'utilisation des ressources mises à disposition dans le réseau de partage.

Selon un aspect de l'invention, le procédé comprend en outre :
- une étape d'obtention d'informations de description dudit au moins un flux ;
- une étape d'estimation d'un besoin de ressources supplémentaires pour traiter la requête de livraison, en fonction des informations de description obtenues et des ressources disponibles pour le premier équipement d'accès ;
et l'étape de détermination de ladite au moins une portion de flux prend en compte en outre le besoin de ressources supplémentaire estimé.

Le premier équipement d'accès estime ses besoins en termes de ressources partagées, en fonction notamment de la taille du flux multimédia et des ressources d'accès dont il dispose lui-même par abonnement.

Un avantage est qu'il peut répartir de façon efficace la charge entre les différents équipements d'accès du réseau local de partage.

Selon un aspect de l'invention, les commandes de livraison des différentes portions du flux multimédia sont émises séquentiellement. Un avantage est qu'une portion reçue peut être retransmise dans la foulée au terminal d'utilisateur sans nécessiter de stockage intermédiaire.

Selon une variante, les commandes de livraison des différentes portions du flux multimédia sont émises sans contrainte particulière dans le réseau local de partage. En revanche, la retransmission d'une portion n'est déclenchée qu'une fois terminée la retransmission de la portion précédente au terminal d'utilisateur. Cette solution présente l'avantage de paralléliser de la livraison du flux, mais nécessite des capacités locales de stockage.

Le procédé qui vient d'être décrit dans ses différents modes de réalisation est avantageusement mis en oeuvre par un dispositif de traitement d'une requête de livraison, émise par un terminal d'utilisateur d'au moins un flux de données à destination d' un serveur distant connecté à un réseau de télécommunications, ledit terminal étant connecté audit réseau de télécommunications par l'intermédiaire d'un premier équipement d'accès.

Selon l'invention, ledit dispositif comprend les unités suivantes:
- obtention de ladite requête de livraison dudit au moins un flux;
- obtention d'au moins une offre de mise à disposition de ressources pour la livraison d'au moins une portion dudit flux en provenance d'un réseau de partage apte à connecter ledit premier équipement d'accès à au moins un deuxième équipement d'accès, voisin dudit deuxième équipement d'accès ;

- détermination d'une taille de ladite moins une portion dudit flux en fonction de ladite au moins une offre reçue ;
- émission d'une requête de commande de livraison de ladite au moins une portion dudit contenu à destination dudit au moins un deuxième équipement ; et
- retransmission de ladite au moins une portion au terminal d'utilisateur, apte à être mise en oeuvre sur réception de ladite au moins une portion.

L'invention concerne aussi un procédé de gestion de ressources de livraison d'un flux de données disponibles pour un deuxième équipement d'accès à un réseau de télécommunications d'un opérateur.

Selon l'invention, un tel procédé comprend les étapes suivantes :
- estimation d'une quantité de ressources disponibles au niveau dudit équipement d'accès audit réseau ;
- émission d'une offre de mise à disposition de ressources pour la livraison du flux de données dans un premier réseau local, dit réseau de partage connectant ledit deuxième équipement d'accès à au moins un premier équipement d'accès, au moins en fonction de la quantité de ressources estimée ;
- exécution d'une commande de livraison d'au moins une portion d'un flux de données multimédia, reçue dudit réseau de partage.

Un tel procédé permet de mutualiser les ressources disponibles au niveau d'une pluralité d'équipements d'accès à un réseau de télé communication. Selon l'invention, ces équipements sont voisins et aptes à se connecter à un même réseau local de partage. Une offre de mise à disposition de ressources est émise dans le réseau de partage par un équipement d'accès demandeur et sur réception d'une commande de livraison d'une portion d'un flux de données multimédia, les ressources mises à disposition par des équipements d'accès contributeurs du réseau de partage sont exploitées par l'équipement d'accès demandeur pour livrer le flux de données à l'équipement terminal.

Le procédé qui vient d'être décrit dans ses différents modes de réalisation est avantageusement mis en oeuvre par un dispositif de gestion de ressources de livraison d'un flux de données selon l'invention.
Un tel dispositif de gestion comprend les unités suivantes :
- estimation d'une quantité de ressources disponibles au niveau dudit équipement d'accès audit réseau ;
- émission d'une offre de mise à disposition de ressources pour une livraison du flux de données multimédia dans un premier réseau local, dit réseau de partage connectant ledit deuxième équipement d'accès à au moins un premier équipement d'accès ;
- exécution d'une commande de livraison d'au moins une portion du flux de données multimédia, reçue dudit réseau de partage.

L'invention concerne aussi un module proxy comprenant un premier module de connexion à un premier équipement d'accès à un réseau de télécommunications et un deuxième module de connexion à un premier réseau local, dit réseau de partage, apte à connecter ledit premier équipement d'accès à au moins un deuxième équipement d'accès audit réseau de télécommunications.

Selon l'invention, un tel module proxy comprend un dispositif de traitement d'une requête de livraison, émise par un terminal d'utilisateur d'au moins un flux multimédia à destination d'un serveur distant connecté audit réseau de télécommunications selon l'invention et un dispositif de gestion de ressources de livraison disponibles pour un équipement d'accès audit réseau de télécommunications selon l'invention.

Un tel module proxy est inséré dans l'installation domestique d'un utilisateur abonné au réseau de télécommunications WAN d'un opérateur. Il est à la fois connecté au réseau WAN de l'opérateur par l'intermédiaire de l'équipement d'accès de l'abonné, au réseau local LAN de cet abonné et au réseau local de partage. Ce réseau de partage, en connectant l'équipement d'accès à des équipements d'accès voisins eux-mêmes connectés au réseau WAN de l'opérateur, procure de ce fait au module proxy d'autres possibilités d'accès à ce réseau WAN.

L'invention concerne aussi un équipement d'accès comprenant un module de connexion à un terminal d'utilisateur par l'intermédiaire d'un deuxième réseau local et un module proxy selon l'invention.

L'invention concerne en outre un réseau local de partage. Selon un premier mode de réalisation de l'invention, un tel réseau est apte à connecter directement une pluralité d'équipements d'accès selon l'invention. Un avantage est que l'équipement d'accès du client intègre l'ensemble des caractéristiques techniques nécessaires à la mise en oeuvre de l'invention.

Selon un deuxième mode de réalisation de l'invention, le réseau local de partage est apte à connecter une pluralité de modules proxy selon l'invention. Un module proxy est connecté à l'équipement d'accès de son utilisateur par l'intermédiaire du réseau local LAN de cet utilisateur. Un avantage de deuxième réseau est de ne pas modifier l'architecture et la structure de l'équipement d'accès d'un utilisateur.

L'invention concerne encore un programme d'ordinateur comportant des instructions pour la mise en oeuvre des étapes d'un procédé de traitement d'une requête de livraison tel que décrit précédemment, lorsque ce programme est exécuté par un processeur.

L'invention concerne aussi un programme d'ordinateur comportant des instructions pour la mise en oeuvre des étapes d'un procédé de gestion de ressources de livraison d'un flux de données tel que décrit précédemment, lorsque ce programme est exécuté par un processeur. Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de traitement d'une requête de livraison et au dispositif de gestion de ressources de livraison d'un flux de données selon l'invention, éventuellement amovible, mémorisant respectivement un programme d'ordinateur mettant en oeuvre un procédé de traitement d'une requête de livraison et un programme d'ordinateur mettant en oeuvre un procédé de gestion de ressources de livraison d'un flux de données, tels que décrits précédemment.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure **1**, déjà décrite, présente un exemple de système d'agrégation physique de lignes DSL selon l'art antérieur ;
- la figure **2** présente un premier mode de réalisation de l'invention, selon lequel les équipements d'accès sont connectés directement au réseau local de partage ;
- la figure **3** présente un deuxième mode de réalisation de l'invention, selon lequel les équipements d'accès sont connectés au réseau local de partage par l'intermédiaire de modules proxy selon l'invention;
   la figure **4** présente de façon schématique les étapes du procédé de traitement d'une requête de livraison selon un mode de réalisation de l'invention ;
- la figure **5** présente de façon schématique les étapes du procédé de gestion de ressources de livraison d'un flux de données selon un mode de réalisation de l'invention ;
- la figure **6** présente de façon schématique une exemple de structure simplifiée d'un dispositif de requête de livraison et d'un dispositif de gestion de ressources selon l'invention ;
- la figure **7** présente sous la forme d'un diagramme de flux les messages échangés entre une pluralité de modules proxys selon l'invention en réponse à l'émission d'une requête de livraison d'un flux de données par un équipement terminal, lorsque le flux de données requis est un fichier à télécharger ;
- la figure **8** présente sous la forme d'un diagramme de flux les messages échangés dans le réseau de partage en réponse à l'émission d'une requête de livraison d'un flux de données, lorsque le flux de données est un flux diffusé en live ; et
- la figure **9** présente sous la forme d'un diagramme de flux les messages échangés dans le réseau de partage en réponse à l'émission d'une requête de livraison d'un flux de données, lorsque le flux de données est un flux live accessible par portions.

### 7. Description d'un mode de réalisation particulier de l'invention

Le principe général de l'invention repose sur la mise en place d'un réseau local de partage entre les équipements d'accès à un même réseau de télécommunications opéré d'abonnés voisins, de façon à mutualiser de façon dynamique les ressources disponibles au sein de la pluralité d'équipements d'accès en réponse à une requête de livraison d'un flux de données par un des abonnés.

On notera que l'invention qui va être décrite ci-dessous de façon plus détaillée, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

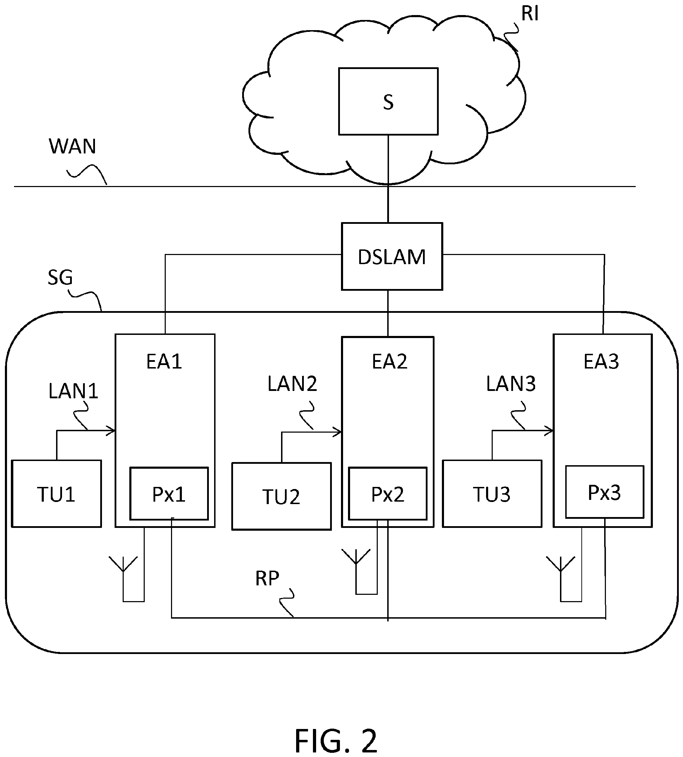

En relation avec la Figure **2**, on présente un exemple de système SG de gestion de ressources entre des équipements d'accès à un réseau de télécommunications IP d'un opérateur selon un premier mode de réalisation de l'invention.

Dans cet exemple, on considère trois équipements d'accès EA1, EA2 et EA3 connectés respectivement à un réseau WAN d'accès au réseau Internet RI d'un opérateur. Ces équipements sont par exemple des passerelles domestiques ou d'entreprise.

Un premier équipement terminal TU1 est connecté au premier équipement d'accès EA1 par l'intermédiaire d'un réseau local LAN1, un deuxième équipement terminal TU2 est connecté au premier équipement d'accès EA2 par l'intermédiaire d'un réseau local LAN2 et un troisième équipement terminal TU3 est connecté au premier équipement d'accès EA1 par l'intermédiaire d'un réseau local LAN3. Les réseaux locaux LAN1, LAN2, LAN3 utilisent soit des moyens de connexion sans fil courte portée, par exemple de type Wifi, ou bien des moyens de connexion filaires, par exemple de type courant porteur en ligne CPL.

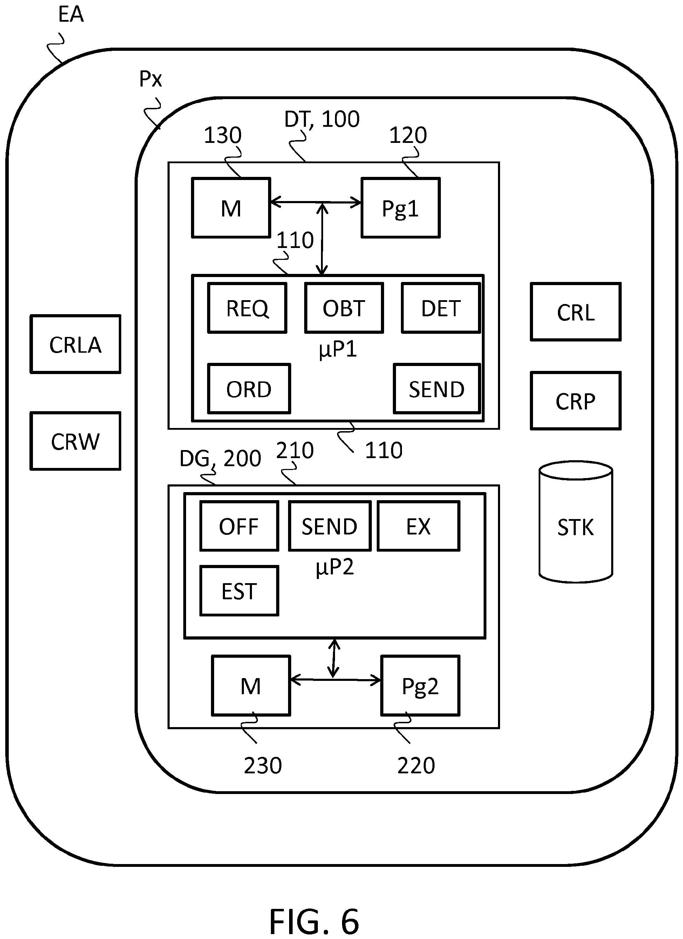

Selon l'invention, les équipements d'accès EA1, EA2 et EA3 sont en outre connectés entre eux par l'intermédiaire d'un réseau local de partage RP, par exemple à l'aide d'un module de communication sans fil courte portée, par exemple Wifi. Selon ce mode de réalisation de l'invention, les équipements d'accès EAi intègrent un module proxy Pxi comprenant un dispositif DTi de traitement d'une requête de livraison et un dispositif DGi de gestion de ressources selon l'invention. Un exemple de structure simplifiée de ces dispositifs selon l'invention sera décrit plus en détails en relation avec la Figure **6****.**

Selon ce premier mode de réalisation de l'invention, lorsque le premier équipement terminal TU1 émet une requête d'un livraison d'un flux de données à destination d'un serveur distant S du réseau internet RI, cette requête est reçue par l'équipement d'accès EA1 et traitée par le dispositif DT1 de traitement d'une requête de livraison selon l'invention. Le dispositif DT1 obtient des offres de mise à disposition de ressources en provenance des dispositifs DG2, DG3 de gestion de ressources intégrés aux autres équipements d'accès EA2, EA3 connectés au réseau de partage et traite la requête de livraison en fonction des offres obtenues.

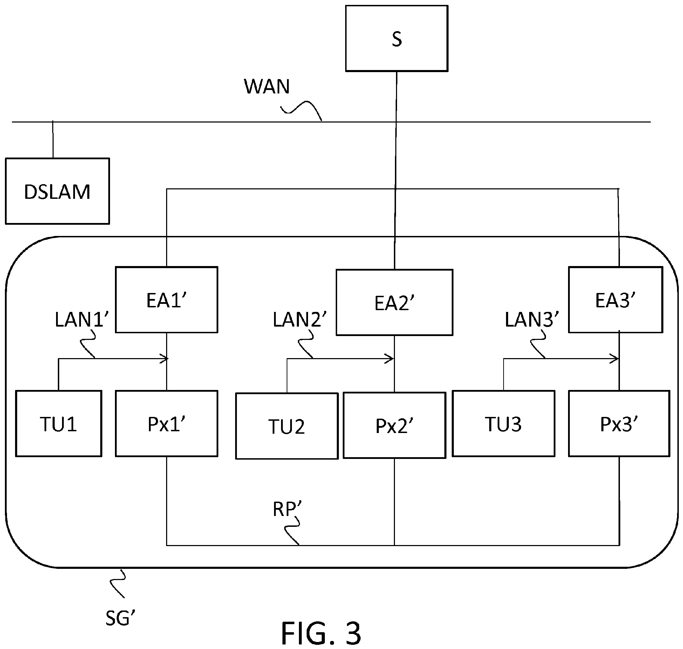

En relation avec la Figure **3****,** on présente maintenant un exemple de système de gestion de ressources SG' entre des équipements d'accès à un réseau de télécommunications IP d'un opérateur selon un deuxième mode de réalisation de l'invention.

Dans cet exemple, on considère de nouveau trois équipements d'accès EA1', EA2' et EA3' connectés respectivement au réseau WAN d'accès à au réseau Internet RI d'un opérateur, par l'intermédiaire d'un équipement de type DSLAM. Le premier équipement terminal TU1 est connecté au premier équipement d'accès EA1 par l'intermédiaire d'un réseau local LAN1', le deuxième équipement terminal TU2 est connecté au premier équipement d'accès EA2' par l'intermédiaire d'un réseau local LAN2' et le troisième équipement terminal TU3 est connecté au premier équipement d'accès EA1' par l'intermédiaire d'un réseau local LAN3'.

Dans cet exemple, on a représenté les trois équipements d'accès connectés au réseau WAN par le même équipement DSLAM. Bien sûr, l'invention ne se limite pas à ce cas, les équipements d'accès pouvant être connectés au réseau opérateur par l'intermédiaire d'équipements DSLAM distincts.

Selon ce deuxième mode de réalisation de l'invention, les équipements d'accès EA1', EA2' et EA3' sont connectés au réseau local de partage RP', respectivement par l'intermédiaire d'un module proxy Px1, Px2, Px3. Par exemple, ces modules proxy comprennent un module de communication sans fil, par exemple Wifi qui leur permet de se connecter entre eux et de constituer le réseau local de partage RP.

Selon une variante, ils comprennent un module de connexion à un réseau de courant porteur de ligne outdoor, qui leur permet d'établir une communication entre deux réseaux électriques domestiques voisins. Un exemple de description d'implémentation de tels réseau de courant porteur de ligne outdoor est disponible à l'adresse suivante: http://www.techniques-ingenieur.fr/base-documentaire/technologies-de-I-information-th9/reseaux-locaux-42292210/technologies-cpl-courants-porteurs-en-ligne-te7220/principales-technologies-cpl-te7220niv10001.html#1.5).

Selon ce deuxième mode de réalisation de l'invention, ce sont les modules proxy Px1, Px2, Px3 qui intègrent un dispositif de traitement d'une requête de livraison DT1, DT2, DT3 et un dispositif de gestion de ressources DG1, DG2, DG3 selon l'invention. Ces dispositifs selon l'invention seront décrits plus en détails en relation avec la Figure **6****.**

Selon ce deuxième mode de réalisation de l'invention, lorsque le premier équipement terminal TU1 émet une requête d'un livraison d'un flux de données à destination d'un serveur distant S du réseau internet RI, cette requête est transmise dans le réseau local LAN1' de l'installation domestique de cet utilisateur. Elle est traitée par le dispositif DT1 de traitement d'une requête de livraison RL1 du module proxy Px1 selon l'invention.

On notera que le module proxy Px1 peut jouer son rôle de proxy selon au moins deux modes différents. Selon un premier mode, il est utilisé en mode relais, c'est-à-dire qu'il reçoit la requête de livraison d'un flux en provenance de l'équipement terminal TU1 à la place de l'équipement d'accès EA1'. Selon un deuxième mode, il est utilisé en mode proxy dit transparent, c'est-à-dire qu'il intercepte la requête de livraison destinée à l'équipement d'accès EA1.

Le dispositif DT1 intégré au module proxy Px1 obtient des offres de mise à disposition de ressources en provenance des dispositifs de gestion de ressources intégrés aux autres modules proxy Px2, Px3 connectés au réseau de partage RP et traite la requête de livraison en fonction des offres obtenues.

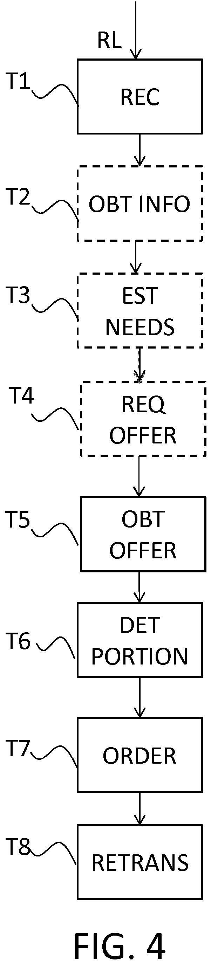

Un dispositif DT, DT1, DT2, DT3 de traitement d'une requête de livraison met en oeuvre un procédé de traitement d'une requête de livraison selon l'invention. Un exemple de mise en oeuvre de ce procédé va maintenant être présenté en relation avec la Figure **4**.

Un tel procédé comprend une première étape T1 de réception d'une requête RL de livraison d'un flux de données émise par l'équipement terminal TU1. Cette requête est destinée au serveur distant S.

De façon optionnelle, une deuxième étape T2 d'obtention d'informations de description du flux de données est mise en oeuvre. Par exemple une requête REQ-ID d'obtention d'informations de description du flux de données est adressée au serveur S et les informations de description sont obtenues dans un message de réponse REC-ID. Ces informations de description comprennent au moins un identifiant ID-FD du flux de données et une quantité totale de données correspondant à ce flux.

De façon optionnelle, une troisième étape T3 d'estimation des besoins en termes de ressources est mise en oeuvre en fonction des informations de description obtenues sur le flux de données requis et de la bande disponible au niveau du premier équipement d'accès EA1.

On entend par ressources aussi bien une capacité de bande passante descendante disponible sur la ligne d'un équipement d'accès voisin EA2, EA3 que le fait de disposer localement en stock d'au moins une portion du flux de données requis par l'équipement terminal TU1.

De façon optionnelle, une étape T4 de requête de mise à disposition de ressources est envoyée au réseau local de partage SN par le dispositif DT1.

En T3, au moins une offre de mise à disposition de ressources est obtenue en provenance du réseau de partage RP.

On comprend que l'invention peut aussi bien être mise en oeuvre en mode PULL qu'en mode PUSH.

En mode PULL, le dispositif DT1 requiert explicitement une mise à disposition de ressources de la part des équipements d'accès EA2 et EA3 connectés au réseau de partage SN. La ou les offres de mise à disposition de ressources obtenues constituent une ou plusieurs réponses explicites à sa requête.

En mode PUSH, les équipements d'accès voisins EA2 et EA3 transmettent de façon spontanée des offres de mise à disposition de ressources, par exemple quand les équipements terminaux TU2 et TU3 qui leur sont connectés n'utilisent pas l'intégralité des ressources de bande passante auxquelles ils ont souscrites.

Bien sûr, une combinaison de ces deux modes peut avantageusement être mise en oeuvre, les équipements d'accès voisins transmettant leurs offres de mise à disposition de ressources aussi bien spontanément qu'en réponse à une requête explicite de la part du dispositif DT1.

Au cours d'une étape T5, le dispositif de traitement DT1 détermine, en fonction des offres obtenues du réseau de partage et des besoins estimés, au moins une portion du flux de données à commander au réseau de partage. De façon avantageuse, il détermine à quel dispositif de gestion de ressources du réseau de partage il convient d'adresser spécifiquement cette commande de livraison, en fonction de l'offre qu'il lui a faite.Au cours d'une étape T6, un message de commande de livraison de ladite au moins une portion de flux déterminée à destination du réseau de partage.

Une fois la portion de flux livrée au dispositif de traitement DT, le dispositif DT livre ladite au moins une portion de flux à l'équipement terminal TU1.

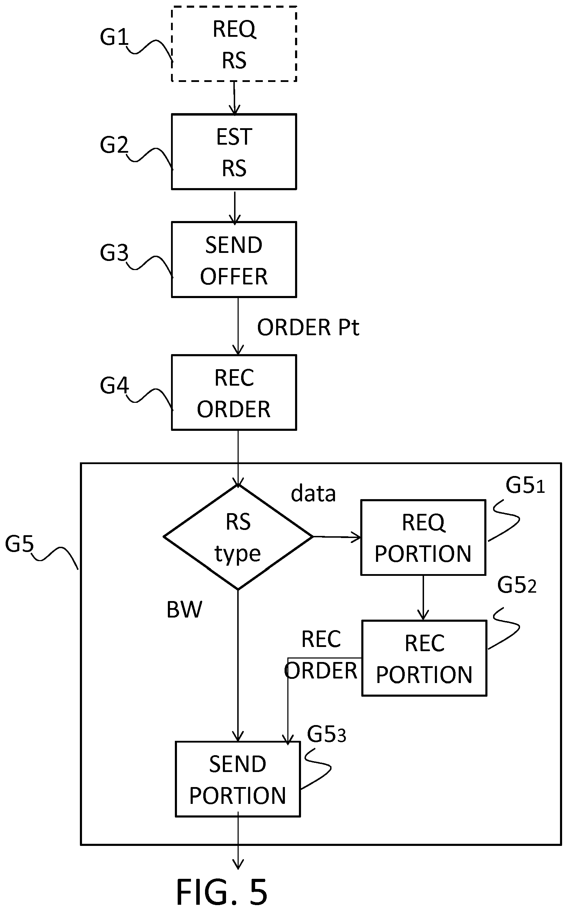

En relation avec la Figure **5**, on présente les étapes du procédé de gestion de ressources de livraison d'un flux de données disponibles mis en oeuvre par un dispositif de gestion DG2 selon l'invention.

Au cours d'une étape G2, le dispositif de gestion DG2 estime une quantité de ressources disponible au niveau de son équipement d'accès EA2. Comme évoqué précédemment, les ressources en question peuvent aussi bien concerner des flux de données disponibles localement au niveau de cet équipement d'accès que des ressources de bande passante descendante sur son accès au réseau WAN qui ne sont pas utilisées à l'instant courant.

Au cours d'une étape G3, il émet à destination du réseau de collecte une offre de mise à disposition de ressources qui est fonction de l'estimation précédente. On comprendra que son offre peut inclure des identifiants de flux de données qu'il a préalablement téléchargés ou bien qu'il est en train de recevoir en streaming ou encore une offre de mise à disposition d'une partie de la bande passante descendante dont il bénéficie pour accéder au réseau WAN de l'opérateur.

Au cours d'une étape G4, le dispositif de gestion DG reçoit une commande de livraison ORDER Pt d'une portion Pt du flux de données en provenance d'un équipement d'accès EA1 connecté au réseau de collecte.

En G5, le dispositif DG exécute la commande de livraison qu'il a reçue.

Si cette portion Pt est déjà stockée dans une mémoire de son équipement d'accès EA2, il répond en G5₃ en retransmettant la portion de flux commandée à l'équipement d'accès EA1 demandeur. S'il est en train de recevoir les paquets de données de cette portion de flux en streaming, il déclenche la retransmission des paquets de données au fur et à mesure de leur réception, à destination de l'équipement d'accès demandeur EA1. Si enfin il ne dispose pas de la portion de flux de données demandée, il commande en G5₁ la livraison de cette portion de flux auprès du serveur en utilisant son propre accès au réseau WAN. Une fois qu'il a reçu en G5₂ la portion de flux demandée, il la retransmet en G5₃ à l'équipement d'accès EA1 par l'intermédiaire du réseau de partage RP.

Comme évoqué précédemment en relation avec la Figure **4**, l'échange des offres de mise à disposition de ressources dans le réseau de partage peut se faire en mode PUSH ou en mode PULL. En mode PUSH, le dispositif de gestion DG pousse dans le réseau son offre de mise à disposition de ressources, par exemple suite à une estimation de ses ressources disponibles. En mode PULL, il envoie son offre en réponse à une requête reçue en G1 d'un équipement d'accès connecté au réseau de partage RP.

En relation avec la Figure **6****,** on présente maintenant un exemple de structure simplifiée d'un dispositif de traitement DT 100 d'une requête de livraison et d'un dispositif de gestion DG de ressources selon l'invention. Dans cet exemple ces deux dispositifs sont intégrés dans un module proxy Px, qui peut, soit constituer un module indépendant, soit être lui-même intégré à l'équipement d'accès EA d'un utilisateur abonné au réseau WAN d'accès au internet RI d'un opérateur.

Le dispositif de traitement 100 met en oeuvre le procédé de traitement selon l'invention qui vient d'être décrit.

Par exemple, le dispositif 100 comprend une unité de traitement 110, équipée d'un processeur P1, et pilotée par un programme d'ordinateur Pg₁ 120, stocké dans une mémoire 130 et mettant en oeuvre le procédé de traitement selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en oeuvre les étapes du procédé de traitement décrit précédemment, selon les instructions du programme d'ordinateur 120. Selon l'invention, le dispositif 100 comprend au moins une unité REC de réception d'une requête de livraison en provenance d'un équipement terminal, une unité OBT d'obtention d'une offre de mise à disposition de ressources en provenance du réseau local de partage RP, une unité DET de détermination d'une portion du flux de données au moins en fonction de l'offre obtenue, une unité ORDER de commande de livraison de la portion de flux déterminée et une unité SEND de retransmission à l'équipement terminal de la portion de flux livrée.

De façon avantageuse, le dispositif 100 comprend en outre une unité OBT INFO d'obtention d'informations de description du flux de données, une unité REQ RES d'émission d'une requête de mise à disposition de ressources à destination du réseau de partage, une unité EST NEEDS d'estimation d'un besoin de ressources en fonction des information de description obtenues.

Ces unités sont pilotées par le processeur P1 de l'unité de traitement 110.

Le dispositif 100 de traitement est donc agencé pour coopérer avec le module proxy Px et, en particulier les modules suivants de ce module :
- un module de connexion CRL au réseau local LAN par exemple par des moyens de communication radio courte portée de type Wifi ou des moyens de communication filaires par éthernet, par lequel le module proxy Px accède de façon indirecte au réseau WAN de l'opérateur par l'intermédiaire de l'équipement d'accès EA de l'utilisateur ;
- un module de connexion CRP au réseau de partage SN par courant porteur en ligne outdoor ou par des moyens de communication radio courte portée de type Wifi ; et
- un module de stockage STK de portions de flux qu'il a reçues du serveur S ou du réseau de partage, avant leur retransmission à l'équipement terminal TU.

Le dispositif de gestion DG 200 met en oeuvre le procédé de gestion selon l'invention tel que décrit ci-dessus.

Par exemple, le dispositif DG 200 comprend une unité de traitement 210, équipée par exemple d'un processeur P2, et pilotée par un programme d'ordinateur Pg₁ 220, stocké dans une mémoire 230 et mettant en oeuvre le procédé de gestion selon l'invention.

A l'initialisation, les instructions de code du programme d'ordinateur Pg₂ 220 sont par exemple chargées dans une mémoire RAM avant d'être exécutées par le processeur de l'unité de traitement 210. Le processeur de l'unité de traitement 210 met en oeuvre les étapes du procédé de gestion décrit précédemment, selon les instructions du programme d'ordinateur 220. Selon l'invention, le dispositif 200 comprend au moins une unité EST d'estimation de ressources disponibles au niveau de l'équipement d'accès au réseau de l'opérateur, que ce soit en termes de bande passante descendante ou en termes de flux de données déjà stockés localement, une unité OFF d'émission d'une offre de mise à disposition de ressources à destination du réseau de partage RP, une unité REC ORD de réception d'une commande de livraison d'une portion Pt d'un flux de données, une unité EX d'exécution de la commande.

De façon avantageuse, le dispositif 200 comprend en outre une unité REQ RES de mise à disposition de ressources en provenance d'un équipement d'accès voisin par l'intermédiaire du réseau de collecte RP.

Ces unités sont pilotées par le processeur P2 de l'unité de traitement 210.

Le dispositif 200 de gestion est donc agencé pour coopérer avec le module proxy Px et, en particulier les modules suivants de ce module : le module CRL de connexion au réseau local LAN et le module de connexion CRP au réseau de partage RP, précédemment présenté. De façon avantageuse, le module proxy comprend un module STK de stockage de données, apte à stocker des flux de données dont la livraison a préalablement été commandée par l'équipement d'accès EA.

Selon un mode de réalisation de l'invention, le module proxy Px est intégré à l'équipement d'accès EA au réseau WAN de l'opérateur. Dans ce mode, le module proxy est agencé pour coopérer avec l'équipement d'accès EA, en particulier avec son module d'accès au réseau WAN CRW et son module de connexion CRLA au réseau local LAN de l'utilisateur abonné.

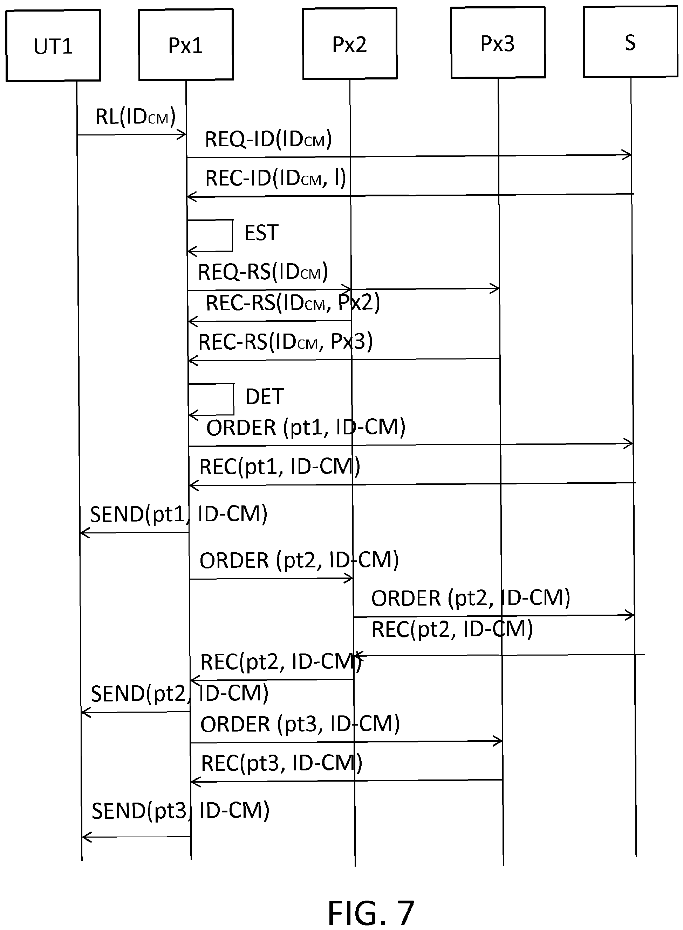

En relation avec la Figure **7**, on présente un exemple de cas d'usage de l'invention. Dans cet exemple, on considère un réseau de partage RP connectant trois installations domestiques, par l'intermédiaires des trois modules proxy Px1, Px2 et Px3 selon l'invention. L'équipement terminal TU1 de la première installation domestique émet à destination du serveur S distant une requête de livraison RL d'un flux de données FD1. Il s'agit d'un contenu multimédia disponible sous la forme d'un fichier à télécharger. Il est identifié par son identifiant ID_{CM}. Cette requête RL est reçue ou interceptée par le module Proxy Px1 de l'installation domestique de l'équipement terminal TU1. Dans cet exemple, ce module a été représenté de façon indépendante de l'équipement d'accès EA1, mais comme évoqué précédemment, l'invention ne se limite pas à cet exemple, le module proxy Px1 pouvant être intégré à l'équipement d'accès EA1.

Sur réception de cette requête, le module proxy PX1 émet une requête d'informations REQ-ID de description du flux de données FD1 à destination du serveur S. Il obtient en retour un message de réponse REP-ID comprenant au moins une URL d'accès au fichier et une information relative à une quantité de données à télécharger.

Le module proxy Px1 utilise les informations de description obtenues ainsi que des informations relatives à une quantité de ressources dont il dispose localement pour estimer un besoin de ressources supplémentaire BRS à demander au réseau de partage RP.

Il émet ensuite une requête de mise à disposition de ressources REQ-RS à destination du réseau de partage RP. Cette requête comprend avantageusement l'identifiant ID_{CM} du fichier de données requis par l'équipement terminal.

Cette requête est reçue par les modules proxy Px2 et Px3 connectés au réseau de partage SN. Un module Pxi, avec i entier égal à 2 ou 3 peut répondre à cette requête d'au moins quatre façons :
1- Il dispose d'au moins une portion du fichier de données IDCM et l'indique dans sa réponse REP-RS-PXi ;
2- Il dispose de bande passante non utilisée et indique la quantité qu'il met à disposition dans sa réponse REP-RS-Pxi ;
3- Il offre à la fois la portion de fichier dont il dispose et de la bande passante. Il indique les deux dans sa réponse ;
4- Il n'a pas de ressources à partager, il répond par la négative.

Sur réception des réponses des modules proxy Pxi du réseau de partage SN, le module proxy Px1 détermine en fonction des offres reçues la contribution qu'il va demander aux modules proxy qui lui ont répondu favorablement.

Dans l'exemple de la Figure **7**, on suppose que le module proxy voisin Px2 met à disposition une quantité de bande passante BP2 et que le module proxy voisin Px3 met à disposition une portion P3 du fichier de données.

Le module proxy Px1 exploite ces offres de mise à disposition, sa propre estimation de besoins et la longueur I du fichier de données qu'il souhaite télécharger pour déterminer une portion P2 du fichier de données dont il va commander la livraison au module proxy Px2 et une portion P1 du fichier de données dont il va prendre en charge lui-même de la livraison.

Il émet donc une commande de livraison ORDER(Pt1, IDCM) d'une première portion P1 du fichier de données à destination du serveur distant S via le réseau WAN. Une fois qu'il l'a reçue, il la retransmet à l'équipement terminal TU1. Il envoie ensuite une commande de livraison de la portion P2 du fichier de données IDCM au module proxy Px2. Sur réception de cette commande, le module proxy Px2 émet une commande de livraison de la portion P2 du fichier de données IDCM au serveur distant S via le réseau WAN. Une fois qu'il l'a reçue, il la retransmet au module proxy demandeur Px1 via le réseau de partage. Ce dernier la renvoie à l'équipement terminal TU1 sur le réseau local LAN1. Enfin, le module proxy Px1 émet une commande de livraison de la troisième portion Pt3 du fichier de données IDCM au module proxy voisin Px3 via le réseau de partage. Celui-ci dispose de cette portion du fichier de données en mémoire, il la retransmet donc directement au module proxy demandeur Px1 par l'intermédiaire du réseau de partage RP. Ce dernier la renvoie à l'équipement terminal TU1 sur le réseau local LAN1.

On comprend qu'avec l'invention, le module Px1 profite au mieux des différentes ressources disponibles au sein du réseau de partage RP, ce qui lui permet de livrer le flux de données IDCM demandé par l'équipement terminal TU1 dans les meilleurs délais tout en optimisant l'utilisation des ressources d'accès au réseau WAN de l'opérateur.

Dans cet exemple, le module proxy Px1 commande les portions de fichier les unes après les autres de façon à les recevoir dans le bon ordre à l'équipement terminal TU1 sans intervention supplémentaire. Ceci lui permet de conserver l'intégrité du contenu, mais également de l'utiliser de façon progressive, comme par exemple dans le cas d'une vidéo dont la visualisation peut commencer avant la fin du téléchargement du fichier complet.

Bien sûr, l'invention ne se limite pas à cet exemple de mise en oeuvre. Le module proxy Px1 aurait tout aussi bien pu émettre ses trois commandes de livraison simultanément et stocker temporairement les portions reçues dans son module de stockage STK avant de les renvoyer dans le bon ordre à l'équipement terminal TU1.

Dans cet exemple, on a aussi supposé qu'il était possible de commander le transfert d'un fichier de données en portions de tailles variables, choisies par le module proxy. Un exemple d'implémentation est l'utilisation du champ « Range » de l'entête http d'une requête de livraison qui permet à un client de ne demander qu'une portion d'un contenu. Un autre exemple d'implémentation concerne les contenus déjà préparés en sous-éléments indépendants comme le sont les flux en streaming adaptatif tel que le Smooth Streaming de Microsoft ou le HTTP Live Streaming d'Apple

On notera que cet exemple de réalisation s'applique aussi à un fichier de type « Adaptive streaming ». Un tel fichier est découpé en petites portions ou sous-éléments qui forment des fichiers indépendants. On citera à titre d'exemple le format « Smooth Streaming » de Microsoft ou le format « HTTP Live Streaming » d'Apple . La structure de découpage du fichier est généralement décrite dans un fichier d'informations de description, appelé fichier « Manifest ».

Le module proxy obtient ce fichier lors de sa demande d'informations de description du fichiers de données évoquée dans l'exemple précédent. A partir de ce fichier, il peut choisir ou faire choisir à l'équipement terminal TU1 un niveau de qualité du contenu multimédia parmi plusieurs disponibles. En fonction du niveau de qualité choisi, il déduit du fichier « Manifest » les fichiers à télécharger et il répartit la charge de la livraison sur les différents modules proxy du réseau de partage en fonction des offres de mise à disposition de ressources reçues et de la taille des fichiers « Adaptive streaming » à télécharger.

Si besoin, il peut aussi appliquer l'exemple de mise en oeuvre précédemment décrit à chacun des sous-éléments formant le flux de données « Adaptive streaming ».

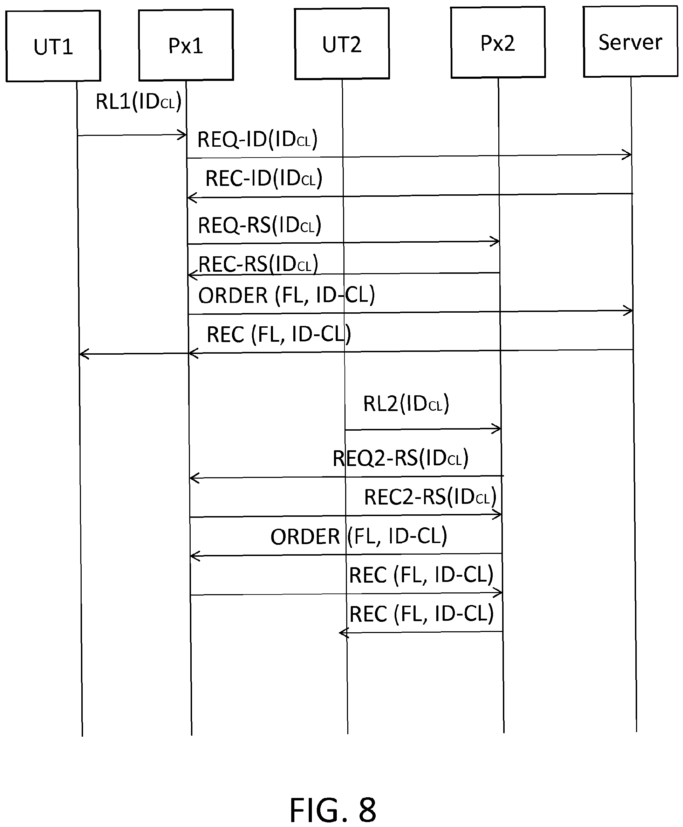

En relation avec la Figure **8**, on présente maintenant un exemple de mise en oeuvre de l'invention dans le cas d'un flux de données « live ». On entend par flux de données live, un flux de données diffusé en direct par un serveur source.

Un équipement terminal TU1 émet une requête de livraison d'un flux de données Live auprès d'un serveur distant S via le réseau WAN d'un opérateur. Cette requête comprend une demande d'abonnement au flux live, de type IGMP (pour « Internet Group Management Protocol », en anglais). Il s'agit par exemple d'un programme audiovisuel diffusé en multicast par une chaîne de programmes live. Cette requête est reçue ou interceptée par le module proxy Px1 du réseau local LAN1 de cet équipement terminal. Le module proxy Px1 émet une requête d'informations de descriptions du flux de données live auprès du serveur S. Il obtient en retour au moins une URL d'accès au flux live, par exemple de type rtp://adresseIP:port selon le protocole RTP (pour « Real-Time Transport Protocol » en anglais) et une information relative à une largeur I de bande passante descendante nécessaire pour recevoir le flux live.

Il émet ensuite une requête de mise à disposition de ressources dans le réseau de partage, ladite requête comprenant les informations de description du flux live. Dans cet exemple, il ne reçoit que des réponses négatives, car aucun module proxy n'a demandé à recevoir ce flux. Le module proxy Px1 commande donc la transmission du flux live. Au cours de cette transmission, un module proxy voisin Px2 reçoit de l'équipement terminal TU2 une requête de livraison du même flux. Il transmet donc une requête de mise à disposition de ressources relative à ce flux live dans le réseau de partage et reçoit une réponse positive du module proxy Px1. Il répond donc par une commande de livraison du flux live au module Px1. Ce dernier, qui a commencé à recevoir des paquets de données de ce flux live et à les retransmettre à l'équipement terminal TU1, devient en outre relais multicast pour le module proxy Px2. En effet, il déclenche en parallèle la retransmission des paquets de données qu'il reçoit en multicast au module proxy Px2 lequel les retransmet à l'équipement terminal TU2. Ainsi l'équipement terminal TU2 profite d'une livraison d'un flux live en cours.

Dans l'exemple qui vient d'être présenté, le flux Live n'est pas séparable. Il n'est disponible qu'auprès d'une seule adresse multicast.

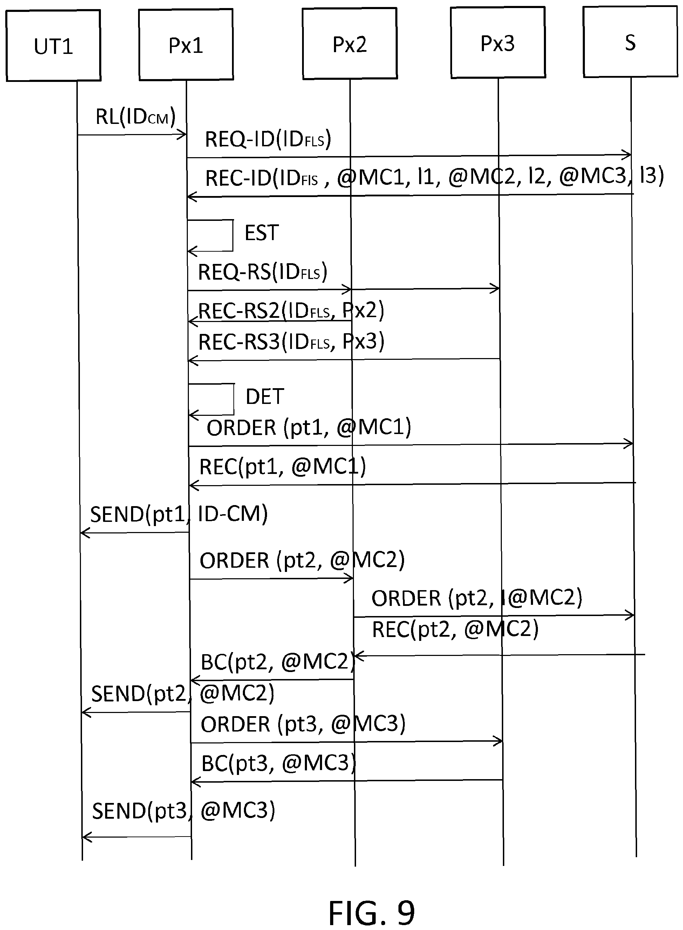

En relation avec la Figure **9**, on présente maintenant un exemple de traitement d'une requête de livraison, dans le cas d'un flux live séparable FLS, c'est-à-dire préparé pour être séparable en plusieurs portions disponibles simultanément sur plusieurs adresses multicast.

Il s'agit par exemple d'un flux codé de façon hiérarchisée, par exemple selon un format échelonnable (« scalable », en anglais), de type MPEG-4 SVC, comprenant une première couche de données dite couche de base et au moins une deuxième couche de données dite couche de rehaussement. La première couche peut avantageusement être diffusée depuis une première adresse multicast, la ou les couches de rehaussement étant diffusées sur d'autres adresses multicast.

Une autre façon connue de rendre un flux séparable est de séparer les sous-flux qui le constituent, par exemple diffuser le sous-flux vidéo sur une première adresse multicast et le sous-flux audio et/ou les sous-flux de sous-titres sur une deuxième adresse multicast.

Encore une autre manière de rendre un flux séparable est d'utiliser une technique de partitionnement de données (pour « data partitioning », en anglais) pour répartir les données codées entre plusieurs sources de diffusion multicast.

L'équipement utilisateur TU1 émet une requête de livraison d'un flux de données live séparable FLS à destination d'un serveur distant S. Le module proxy Px1 émet une requête d'informations de descriptions du flux de données live séparable auprès du serveur S. On suppose que le flux live demandé est séparable en trois portions Pt1, Pt2, Pt3, chacune étant disponible à une adresse multicast différente.

Le module proxy Px1 obtient en réponses plusieurs URL @MC1, @MC2 et @MC3 d'accès au flux live, correspondant aux différentes adresses de sources multicast @MC1, @MC2 et @MC3 des différentes portions Pt1, Pt2 et Pt3 du flux live et des informations relatives à une largeur I1, I2, I3 de bande passante descendante nécessaire pour recevoir chacun de ces portions.

Le module proxy Px1 émet ensuite une requête de mise à disposition de ressources dans le réseau de partage, ladite requête comprenant les informations de description du flux live FLS précédemment évoquées.

On suppose que les modules proxy voisins Px2 et Px3 ne sont pas abonnés au flux live FLS demandé par l'équipement utilisateur TU1, mais qu'ils disposent de bande passante disponible vers le réseau WAN de l'opérateur. Leurs réponses REC-RS2 et REC-RS3 respectives au module proxy Px1 comprennent des informations relatives à la largeur de bande passante qu'ils mettent respectivement à disposition du module proxy Px1.

Le module proxy Px1 détermine alors quelles portions du flux Live il va commander auprès de quel module proxy voisin à partir des offres de chacun et des largeurs de bande passante associées à chacune des portions.

Dans cet exemple, il décide s'abonner directement à la première adresse multicast @MC1 afin de recevoir la première portion du flux Pt1. Il commande au deuxième module proxy Px2 de s'abonner à la deuxième adresse multicast @MC2 pour recevoir la deuxième portion Pt2 du flux et au troisième module proxy Px3 de s'abonner à la troisième adresse multicast @MC3 pour recevoir la troisième portion Pt3 du flux Live.

Sur réception d'une telle commande, un module proxy voisin Px2, Px3 s'abonne à l'adresse multicast indiquée et reçoit la portion Pt2, Pt3 du flux FLS correspondante. Il devient à son tour serveur multicast et rediffuse au premier module le flux BC(pt2, @MC2), BC(pt3, @MC3) Correspondant à la portion Pt2, Pt3 reçue.

Le module proxy destinataire des trois portions du flux FLS se charge ensuite d'agréger les portions reçues et de les retransmettre dans l'ordre à l'équipement terminal TU1.. Cette retransmission peut être mise en oeuvre sous la forme d'un relais multicast.

Ainsi, l'invention permet de mutualiser les largeurs de bande passante dont bénéficient plusieurs abonnés voisins pour faciliter l'accès à des flux de données disponibles dans le réseau internet.

Bien sûr, l'invention ne se limite pas aux exemples qui viennent d'être présentés. Une combinaison des modes de réalisation précédemment décrits ainsi que d'autres modes de réalisation de l'invention peuvent être envisagés.

## Revendications

1. Procédé de traitement d'une requête de livraison (RL), émise par un terminal d'utilisateur (TU1) d'au moins un flux de données (FD, FL, FLS) à destination d'un serveur distant (S) connecté à un réseau de télécommunications (WAN, RI), ledit terminal étant connecté audit réseau de télécommunications par l'intermédiaire d'un premier équipement d'accès (EA1, EA1'), comprenant une étape de réception (T1) de ladite requête de livraison dudit au moins un flux ;
ledit procédé étant **caractérisé en ce qu'**il comprend les étapes suivantes de :
- obtention (T5) d'au moins une offre de mise à disposition de ressources (RES-RS) en provenance d'au moins un deuxième équipement d'accès au réseau de télécommunications (EA2, EA2') par l'intermédiaire d'un premier réseau local, dit réseau de partage (RP, RP'), apte à connecter ledit premier équipement d'accès audit au moins un deuxième équipement d'accès (EA2, EA2') au réseau de télécommunications ;
- détermination (T6) d'au moins une portion (Pt1, Pt2, Pt3) dudit flux en fonction de ladite au moins une offre reçue ;
- émission (T7) d'au moins une commande de livraison de ladite au moins une portion dudit flux à destination dudit au moins un deuxième équipement d'accès par l'intermédiaire du réseau de partage ;
- sur réception de ladite au moins une portion, retransmission (T8) de ladite au moins une portion au terminal d'utilisateur.

2. Procédé de traitement d'une requête de livraison d'un flux de données selon la revendication **1**, **caractérisé en ce qu'**il comprend une étape d'émission (T4) d'une requête de mise à disposition de ressources à destination du réseau de partage (RP, RP') et **en ce que** l'étape d'obtention comprend la réception d'au moins une réponse à ladite requête en provenance du réseau de partage, ladite au moins une réponse comprenant ladite au moins une offre de mise à disposition de ressources.

3. Procédé de traitement d'une requête de livraison d'un flux multimédia selon la revendication **2**, **caractérisé en ce que** :
- ladite requête de mise à disposition de ressources comprend un identifiant du flux de données (ID-CM, ID-FL, ID-FLS);
- ladite au moins une offre de mise à disposition de ressources comprend une offre de livraison au premier équipement d'accès d'au moins une portion (Pt1, Pt2, Pt3) du flux de données disponible dans le réseau de partage;
- ladite au moins une commande de livraison (ORDER) comprend une commande de livraison par le réseau de partage de ladite au moins une portion (Pt3) du flux au premier équipement d'accès (EA1, EA1').

4. Procédé de traitement d'une requête de livraison d'un flux multimédia selon l'une des revendications **1** ou **2**, **caractérisé en ce que** le procédé comprend en outre :
- l'offre de mise à disposition de ressources (REC-RS) comprend des informations relatives à la mise à disposition d'une quantité de bande passante au premier équipement d'accès par le réseau de partage ;
- ladite au moins une commande de livraison comprend une commande d'envoi au serveur distant d'une requête de livraison de ladite au moins une portion (Pt2) du flux par le réseau de partage et de retransmission de ladite au moins une portion livrée au premier équipement d'accès (EA1, EA1').

5. Procédé de traitement d'une requête de livraison d'un flux multimédia selon les revendications **2** et **4**, **caractérisé en ce que** le procédé comprend en outre :
- une étape (T2) d'obtention d'informations de description (REC-ID) dudit au moins un flux ;
- une étape (T3) d'estimation d'un besoin de ressources supplémentaires pour traiter la requête de livraison, en fonction des informations de description obtenues et des ressources disponibles pour le premier équipement d'accès ;
et **en ce que** l'étape (T6) de détermination de ladite au moins une portion de flux prend en compte en outre le besoin de ressources supplémentaire estimé.

6. Dispositif (DT, 100) de traitement d'une requête de livraison, émise par un terminal d'utilisateur (TU1) d'au moins un flux de données à destination d'un serveur distant (S) connecté à un réseau de télécommunications (WAN, RI), ledit terminal étant connecté audit réseau de télécommunications par l'intermédiaire d'un premier équipement d'accès (EA1), ledit dispositif étant apte à connecter le premier équipement d'accès à un premier réseau local, dit réseau de partage, ledit dispositif comprenant une unité d'obtention (REQ) de ladite requête de livraison dudit au moins un flux;
**caractérisé en ce qu'**il comprend en outre les unités suivantes:
-- obtention (OBT) d'au moins une offre de mise à disposition de ressources pour la livraison d'au moins une portion dudit flux en provenance d'au moins un deuxième équipement d'accès au réseau de communications, connecté au réseau de partage ;
- détermination (DET) d'une taille de ladite moins une portion dudit flux en fonction de ladite au moins une offre reçue ;
- émission (ORD) d'une requête de commande de livraison de ladite au moins une portion dudit contenu à destination dudit au moins un deuxième équipement ;
- retransmission (SEND) de ladite au moins une portion au terminal d'utilisateur, apte à être mise en oeuvre sur réception de ladite au moins une portion.

7. Procédé de gestion de ressources de livraison d'un flux de données disponibles pour un deuxième équipement d'accès (EA2) à un réseau de télécommunications (WAN, RI) d'un opérateur, **caractérisé en ce qu'**il comprend les étapes suivantes :
- estimation (G2) d'une quantité de ressources disponibles au niveau dudit équipement d'accès audit réseau ;
- émission (G3) d'une offre de mise à disposition de ressources pour une livraison dudit flux de données dans un premier réseau local, dit réseau de partage connectant ledit deuxième équipement d'accès à au moins un premier équipement d'accès, au moins en fonction de la quantité de ressources estimée ;
- exécution (G5, G6, G7) d'une commande de livraison d'au moins une portion du flux de données, reçue dudit réseau de partage.

8. Procédé de gestion de ressources de livraison d'un flux de données disponibles pour un deuxième équipement d'accès selon la revendication **7**, **caractérisé en ce qu'**il comprend une étape (G1) de réception d'une requête de livraison d'un flux de données en provenance du réseau de partage et **en ce que** l'offre de mise à disposition de ressources émise est en outre fonction de la requête de livraison reçue.

9. Dispositif (DG, 200) de gestion de ressources de livraison d'un flux de données disponibles pour un deuxième équipement d'accès (EA2) à un réseau de télécommunications (WAN, RI) d'un opérateur, agencé pour coopérer avec un module proxy apte à connecter le deuxième équipement d'accès à un premier réseau local, dit réseau de partage, **caractérisé en ce qu'**il comprend les unités suivantes :
- estimation (EST) d'une quantité de ressources disponibles au niveau dudit équipement d'accès audit réseau ;
- émission (OFF) d'une offre de mise à disposition de ressources pour une livraison du flux de données multimédia à destination d'un réseau de partage connectant ledit deuxième équipement d'accès à au moins un premier équipement d'accès au réseau de télécommunications ;
- exécution (EX) d'une commande de livraison d'au moins une portion du flux de données multimédia, reçue dudit réseau de partage.

10. Module proxy (Px, Px1, Px2, Px3) comprenant un premier module de connexion (CRL) à un premier équipement d'accès à un réseau de télécommunications et un deuxième module de connexion (CRP) à un premier réseau local, dit réseau de partage (RP'), apte à connecter ledit premier équipement d'accès à au moins un deuxième équipement d'accès (EA2) audit réseau de télécommunications, **caractérisé en ce qu'**il comprend un dispositif de traitement (DT, 100) d'une requête de livraison, émise par un terminal d'utilisateur (TU1) d'au moins un flux multimédia à destination d'un serveur distant (S) connecté audit réseau de télécommunications selon la revendication **6** et un dispositif (DG, 200) de gestion de ressources de livraison d'un flux de données disponibles pour un équipement d'accès audit réseau de télécommunications selon la revendication 9.

11. Equipement d'accès (EA, EA1, EA2, EA3) à un réseau de télécommunications (WAN, RI), comprenant un module de connexion (CRLA) à un réseau local (LAN) et un module de connexion au réseau de télécommunications, **caractérisé en ce qu'**il comprend un module proxy (Px, Px1, Px2, Px3) selon la revendication **10.**

12. Réseau local, dit réseau de partage (RP), **caractérisé en ce qu'**il est apte à connecter une pluralité d'équipements d'accès (EA1, EA2, EA3) à un réseau de télécommunications (WAN, RI) d'un opérateur selon la revendication **11.**

13. Réseau local, dit réseau de partage (RP') **caractérisé en ce qu'**il est apte à connecter une pluralité de dispositifs de modules proxy (Px1, Px2, Px3) selon la revendication **10.**

14. Système (SG, SG') de gestion de ressources disponibles pour une pluralité d'équipements d'accès (EA1, EA2, EA3, EA1', EA2', EA3') à un réseau de télécommunications (WAN, RI) d'un opérateur en réponse à une requête de livraison d'un flux de données émise par un équipement terminal (TU1) connecté à un premier équipement d'accès (EA1, EA1') de ladite pluralité d'équipements d'accès, **caractérisé en ce qu'**il comprend un réseau local, dit réseau de partage (RP, RP'), selon l'une des revendications **12** ou **13.**

15. Programme d'ordinateur (Pg1, Pg2) comprenant des instructions pour la mise en oeuvre du procédé de traitement d'une requête de livraison d'un flux multimédia selon l'une des revendications **1** à **5** ou du procédé de gestion de ressources de livraison selon la revendication **7.**

## Patentansprüche

1. Verfahren zur Verarbeitung einer Lieferanfrage (RL), die von einem Benutzerendgerät (TU1) ausgegeben wird, mindestens eines Datenflusses (FD, FL, FLS) zu einem entfernten Server (S), der an ein Telekommunikationsnetzwerk (WAN, RI) angeschlossen ist, wobei das Endgerät mit dem Telekommunikationsnetzwerk über eine erste Zugriffsausstattung (EA1, EA1') verbunden ist, das einen Schritt (T1) des Empfangens der Lieferanfrage des mindestens einen Flusses umfasst;
Verfahren **dadurch gekennzeichnet, dass** es außerdem die folgenden Schritte umfasst:
- Erhalten (T5) mindestens eines Ressourcenbereitstellungsangebots (RES-RS), das von mindestens einer zweiten Ausstattung zum Zugreifen auf das Telekommunikationsnetzwerk (EA2, EA2') über ein erstes lokales Netzwerk kommt, Sharing-Netzwerk (RP, RP') genannt, das angepasst ist, um die erste Zugriffsausstattung mit der mindestens einen zweiten Ausstattung (EA2, EA2') zum Zugreifen auf das Telekommunikationsnetzwerk zu verbinden;
- Bestimmen (T6) mindestens eines Abschnitts (Pt1, Pt2, Pt3) des Flusses in Abhängigkeit von dem mindestens einen empfangenen Angebot;
- Ausgeben (T7) mindestens eines Lieferbefehls des mindestens einen Abschnitts des Flusses zu der mindestens einen zweiten Zugriffsausstattung über das Sharing-Netzwerk;
- beim Empfang des mindestens einen Abschnitts, Weiterübertragung (T8) des mindestens einen Abschnitts an das Benutzerendgerät.

2. Verarbeitungsverfahren einer Lieferanfrage eines Datenflusses nach Anspruch 1, **dadurch gekennzeichnet, dass** es einen Sendeschritt (T4) einer Ressourcenbereitstellungsanfrage zu dem Sharing-Netzwerk (RP, RP') umfasst, und dass der Schritt des Erhaltens den Empfang mindestens einer Antwort auf die Anfrage von dem Sharing-Netzwerk umfasst, wobei die mindestens eine Antwort das mindestens eine Ressourcenbereitstellungsangebot umfasst.

3. Verarbeitungsverfahren einer Lieferanfrage eines Multimediaflusses nach Anspruch 2, **dadurch gekennzeichnet, dass**
- die Ressourcenbereitstellungsanfrage einen Identifikator des Datenflusses (ID-CM, ID-FL, ID-FLS) umfasst;
- das mindestens eine Ressourcenbereitstellungsangebot ein Lieferangebot zu der ersten Zugriffsausstattung mindestens eines Abschnitts (Pt1, Pt2, Pt3) des Datenflusses, der in dem Sharing-Netzwerk verfügbar ist, umfasst;
- wobei der mindestens eine Lieferbefehl (ORDER) einen Befehl zum Liefern durch das Sharing-Netzwerk des mindestens einen Abschnitts (Pt3) des Flusses zu der ersten Zugriffsausstattung (EA1, EA1') umfasst.

4. Verarbeitungsverfahren einer Lieferanfrage eines Multimediaflusses nach einem der Ansprüche 1 oder 2 **dadurch gekennzeichnet, dass** das Verfahren außerdem Folgendes umfasst:
- das Ressourcenbereitstellungsangebot (REC-RS) umfasst Informationen in Zusammenhang mit der Bereitstellung einer Bandbreitenmenge zu der ersten Zugriffsausstattung durch das Sharing-Netzwerk;
- der mindestens eine Lieferbefehl umfasst einen Befehl zum Senden an den entfernten Server einer Anfrage zum Liefern des mindestens einen Abschnitts (Pt2) des Flusses durch das Sharing-Netzwerk und Weiterübertragung des mindestens einen gelieferten Abschnitts zu der ersten Zugriffsausstattung (EA1, EA1').

5. Verarbeitungsverfahren einer Lieferanfrage eines Multimediaflusses nach einem der Ansprüche 2 und 4 **dadurch gekennzeichnet, dass** das Verfahren außerdem Folgendes umfasst:
- einen Schritt (T2) des Erhalten von Beschreibungsinformationen (REC-ID) des mindestens einen Flusses;
- einen Schritt (T3) des Schätzens eines Bedarfs an zusätzlichen Ressourcen, um die Lieferanfrage zu verarbeiten, in Abhängigkeit von den erhaltenen Beschreibungsinformationen und Ressourcen, die für die erste Zugriffsausstattung verfügbar sind;
und dass der Schritt (T6) des Bestimmens des mindestens einen Flussabschnitts außerdem den geschätzten zusätzlichen Bedarf an Ressourcen berücksichtigt.

6. Vorrichtung (DT, 100) zum Verarbeiten einer Lieferanfrage, die von einem Benutzerendgerät (TU1) ausgegeben wird, mindestens eines Datenflusses zu einem entfernten Server (S), der an ein Telekommunikationsnetzwerk (WAN, RI) angeschlossen ist, wobei das Endgerät mit dem Telekommunikationsnetzwerk über eine erste Zugriffsausstattung (EA1) verbunden ist, wobei die Vorrichtung geeignet ist, die erste Zugriffsausstattung mit einem ersten lokalen Netzwerk, Sharing-Netzwerk genannt, zu verbinden, wobei die Vorrichtung eine Einheit zum Erhalten (REQ) der Lieferanfrage des mindestens einen Flusses umfasst,
**dadurch gekennzeichnet, dass** es außerdem die folgenden Einheiten umfasst:
- Erhalten (OBT) mindestens eines Ressourcenbereitstellungsangebots für die Lieferung mindestens eines Abschnitts des Flusses von mindestens einer zweiten Ausstattung zum Zugreifen auf das Kommunikationsnetzwerk, das an das Sharing-Netzwerk angeschlossen ist;
- Bestimmen (DET) einer Größe des mindestens einen Abschnitts in Abhängigkeit von dem mindestens einen empfangenen Angebot;
- Ausgeben (ORD) eines Lieferanfragebefehls des mindestens einen Abschnitts des Inhalts zu der mindestens einen zweiten Ausstattung;
- Weiterübertragen (SEND) des mindestens einen Abschnitts an das Benutzerendgerät, das geeignet ist, beim Empfang des mindestens einen Abschnitts umgesetzt zu werden.

7. Verfahren zur Verwaltung von Lieferressourcen eines Flusses von Daten, die für eine zweite Zugriffsausstattung (EA2) verfügbar sind, zu einem Telekommunikationsnetzwerk (WAN, RI) eines Betreibers, **dadurch gekennzeichnet, dass** es die folgenden Schritte umfasst:
- Schätzen (G2) einer verfügbaren Ressourcenmenge im Bereich der Ausstattung zum Zugreifen auf das Netzwerk;
- Ausgeben (G3) eines Ressourcenbereitstellungsangebots für eine Lieferung des Datenflusses in ein erstes lokales Netzwerk, Sharing-Netzwerk genannt, das die zweite Zugriffsausstattung mit mindestens einer ersten Zugriffsausstattung mindestens in Abhängigkeit von der geschätzten Ressourcenmenge verbindet;
- Ausführen (G5, G6, G7) eines Lieferbefehls mindestens eines Abschnitts des Datenflusses, der von dem Sharing-Netzwerk empfangen wird.

8. Verfahren zum Verwalten von Lieferressourcen eines Flusses verfügbarer Daten für eine zweite Zugriffsausstattung nach Anspruch 7, **dadurch gekennzeichnet, dass** es einen Schritt (G1) des Empfangens einer Lieferanfrage eines Datenflusses von dem Sharing-Netzwerk umfasst, und dass das ausgegebene Ressourcenbereitstellungsangebot außerdem von der empfangenen Lieferanfrage abhängt.

9. Vorrichtung (DG, 200) zur Verwaltung von Lieferressourcen eines Flusses von Daten, die für eine zweite Ausstattung (EA2) zum Zugreifen auf ein Telekommunikationsnetzwerk (WAN, RI) eines Betreibers verfügbar sind, die eingerichtet ist, um mit einem Proxy-Modul zusammenzuwirken, das geeignet ist, um die zweite Zugriffsausstattung mit einem ersten lokalen Netzwerk, Sharing-Netzwerk genannt, zu verbinden, **dadurch gekennzeichnet, dass** sie die folgenden Einheiten umfasst:
- Schätzen (EST) einer verfügbaren Ressourcenmenge im Bereich der Ausstattung zum Zugreifen auf das Netzwerk;
- Ausgeben (OFF) eines Ressourcenbereitstellungsangebots für eine Lieferung des Multimedia-Datenflusses zu einem Sharing-Netzwerk, das die zweite Zugriffsausstattung mit mindestens einer ersten Ausstattung zum Zugreifen auf das Telekommunikationsnetz verbindet;
- Ausführen (EX) eines Lieferbefehls mindestens eines Abschnitts des Multimedia-Datenflusses, der von dem Sharing-Netzwerk empfangen wird.

10. Proxy-Modul (Px, Px1, Px2, Px3), das ein erstes Verbindungsmodul (CRL) mit einer ersten Ausstattung zum Zugreifen auf ein Telekommunikationsnetz und ein zweites Modul (CRP) zum Verbinden mit einem ersten lokalen Netzwerk umfasst, Sharing-Netzwerk (RP') genannt, das geeignet ist, die erste Zugriffsausstattung mit mindestens einer zweiten Zugriffsausstattung (EA2) mit dem Telekommunikationsnetzwerk zu verbinden, **dadurch gekennzeichnet, dass** es eine Verarbeitungsvorrichtung (DT, 100) einer Lieferanfrage, die von einem Benutzerendgerät (TU1) ausgegeben wird, mindestens eines Multimediaflusses zu einem entfernten Server (S), der an das Telekommunikationsnetzwerk nach Anspruch 6 angeschlossen ist, und eine Vorrichtung (DG, 200) zum Verwalten von Ressourcen zum Liefern eines Datenflusses, die für eine Ausstattung zum Zugreifen auf das Telekommunikationsnetz nach Anspruch 9 verfügbar sind, umfasst.

11. Ausstattung (EA, EA1, EA2, EA3) für das Zugreifen auf ein Telekommunikationsnetzwerk (WAN, RI), die ein Modul (CRLA) zum Verbinden mit einem lokalen Netzwerk (LAN) und ein Modul zum Verbinden mit dem Telekommunikationsnetzwerk umfasst, **dadurch gekennzeichnet, dass** sie ein Proxy-Modul (Px, Px1, Px2, Px3) nach Anspruch 10 umfasst.

12. Lokales Netzwerk, Sharing-Netzwerk (RP) genannt, **dadurch gekennzeichnet, dass** es geeignet ist, eine Mehrzahl von Ausstattungen (EA1, EA2, EA3) zum Zugreifen auf ein Telekommunikationsnetzwerk (WAN, RI) eines Betreibers nach Anspruch 11 zu verbinden.

13. Lokales Netzwerk, Sharing-Netzwerk (RP') genannt, **dadurch gekennzeichnet, dass** es geeignet ist, eine Mehrzahl von Proxy-Modulvorrichtungen (Px1, Px2, Px3) nach Anspruch 10 zu verbinden.

14. System (SG, SG') zum Verwalten von Ressourcen, die für eine Mehrzahl von Ausstattungen (EA1, EA2, EA3, EA1', EA2', EA3') zum Zugreifen auf ein Telekommunikationsnetzwerk (WAN, RI) eines Betreibers verfügbar sind, als Reaktion auf eine Lieferanfrage eines Flusses von Daten, die von einem Ausstattungsendgerät (TU1), das mit einer ersten Zugriffsausstattung (EA1, EA1') der Mehrzahl von Zugriffsausstattungen verbunden ist, ausgegeben wird, **dadurch gekennzeichnet, dass** es ein lokales Netzwerk, Sharing-Netzwerk (RP, RP') genannt, nach einem der Ansprüche 12 oder 13 umfasst.

15. Computerprogramm (Pg1, Pg2), das Anweisungen für das Umsetzen des Verarbeitungsverfahrens einer Lieferanfrage eines Multimediaflusses nach einem der Ansprüche 1 bis 5 oder des Verarbeitungsverfahrens von Lieferressourcen nach Anspruch 7 umfasst.

## Claims

1. Method for processing a request (RL) sent by a user terminal (TU1) to a remote server (S) connected to a telecommunications network (WAN, RI) to deliver at least one data stream (FD, FL, FLS), said terminal being connected to said telecommunication network via a first accessing equipment (EA1, EA1'), comprising a step (T1) of receiving said request to deliver said at least one stream;
said method being **characterized in that** it furthermore comprises the following steps:
- obtaining (T5) at least one offer to provide resources (RES-RS) from at least one second telecommunication-network accessing equipment (EA2, EA2') via a first local network, called the shared network (RP, RP'), that is able to connect said first accessing equipment to said at least one second telecommunication-network accessing equipment (EA2, EA2');
- determining (T6) at least one segment (Pt1, Pt2, Pt3) of said stream depending on said at least one received offer;
- transmitting (T7) at least one order to deliver said at least one segment of said stream to said at least one second accessing equipment via the shared network;
- on reception of said at least one segment, retransmitting (T8) said at least one segment to the user terminal.

2. Method for processing a request to deliver a data stream according to Claim 1, **characterized in that** it comprises a step (T4) of sending a request for resources to the shared network (RP, RP') and **in that** the obtaining step comprises receiving at least one response to said request from the shared network, said at least one response comprising said at least one offer to provide resources.

3. Method for processing a request to deliver a multimedia stream according to Claim 2, **characterized in that**:
- said request for resources comprises an identifier (ID-CM, ID-FL, ID-FLS) of the data stream;
- said at least one offer to provide resources comprises an offer to deliver, to the first accessing equipment, at least one segment (Pt, Pt2, Pt3) of the data stream available to the shared network;
- said at least one order to deliver (ORDER) comprises an order to deliver, via the shared network, said at least one segment (Pt3) of the stream to the first accessing equipment (EA1, EA1').

4. Method for processing a request to deliver a multimedia stream according to either of Claims 1 and 2, **characterized in that** the method furthermore comprises:
- the offer to provide resources (REC-RS) comprises information relating to the provision of an amount of bandwidth to the first accessing equipment by the shared network;
- said at least one order to deliver comprises an order to send to the remote server a request to deliver said at least one segment (Pt2) of the stream via the shared network and to retransmit said at least one delivered segment to the first accessing equipment (EA1, EA1').

5. Method for processing a request to deliver a multimedia stream according to Claims 2 and 4, **characterized in that** the method furthermore comprises:
- a step (T2) of obtaining description information (REC-ID) of said at least one stream;
- a step (T3) of estimating the additional resources required to process the request to deliver, depending on the obtained description information and on the resources available to the first accessing equipment; and **in that** the step (T6) of determining said at least one stream segment furthermore takes into account the estimated required additional resources.

6. Device (DT, 100) for processing a request sent by a user terminal (TU1) to a remote server (S) connected to a telecommunications network (WAN, RI) to deliver at least one data stream, said terminal being connected to said telecommunication network via a first accessing equipment (EA1), said device being able to connect the first accessing equipment to a first local network, called the shared network, said device comprising a unit (REQ) for obtaining said request to deliver said at least one stream;
**characterized in that** it furthermore comprises the following units:
- a unit (OBT) for obtaining at least one offer to provide resources for the delivery of at least one segment of said stream from at least one second telecommunication-network accessing equipment, which device is connected to the shared network;
- a unit (DET) for determining a size of said at least one segment of said stream depending on said at least one received offer;
- a unit (ORD) for transmitting an order request to deliver said at least one segment of said content to said at least one second equipment;
- a unit (SEND) for retransmitting said at least one segment to the user terminal, this being able to be done on reception of said at least one segment.

7. Method for managing data-stream-delivery resources available to a second equipment (EA2) for accessing a telecommunication network (WAN, RI) of an operator, **characterized in that** it comprises the following steps:
- estimating (G2) an amount of resources available to said network accessing equipment;
- transmitting (G3) an offer to provide resources for a delivery of said data stream via a first local network, called the shared network, connecting said second accessing equipment to at least one first accessing equipment, the offer at least depending on the estimated amount of resources;
- executing (G5, G6, G7) an order to deliver at least one data-stream segment, which is received from said shared network.

8. Method for managing data-stream-delivery resources available to a second accessing equipment according to Claim 7, **characterized in that** it comprises a step (G1) of receiving from the shared network a request to deliver a data stream and **in that** the transmitted offer to provide resources furthermore depends on the received request to deliver.

9. Device (DG, 200) for managing data-stream-delivery resources available to a second equipment (EA2) for accessing a telecommunications network (WAN, RI) of an operator, said system being arranged to interact with a proxy module able to connect the second accessing equipment to a first local network, called the shared network, **characterized in that** it comprises the following units:
- a unit (EST) for estimating an amount of resources available to said network accessing equipment;
- a unit (OFF) for transmitting an offer to provide resources for a delivery of the multimedia data stream to a shared network connecting said second accessing equipment to at least one first telecommunication-network accessing equipment;
- a unit (EX) for executing an order to deliver at least one multimedia data-stream segment, which is received from said shared network.

10. Proxy module (Px, Px1, Px2, Px3) comprising a first module (CRL) for connecting via a first accessing equipment to a telecommunication network and a second module (CRP) for connecting to a first local network, called the shared network (RP'), able to connect said first accessing equipment to at least one second equipment (EA2) for accessing said telecommunication network, **characterized in that** it comprises a device (DT, 100) according to Claim 6 for processing a request sent by a user terminal (TU1) to a remote server (S) connected to said telecommunication network to deliver at least one multimedia stream, and a device (DG, 200) according to Claim 9 for managing data-stream-delivery resources available to an equipment for accessing said telecommunication network.

11. Equipment (EA, EA1, EA2, EA3) for accessing a telecommunication network (WAN, RI), comprising a module (CRLA) for connecting to a local network (LAN) and a module for connecting to the telecommunications network, **characterized in that** it comprises a proxy module (Px, Px1, Px2, Px3) according to Claim 10.

12. Local network, called the shared local network (RP), **characterized in that** it is able to connect a plurality of equipments (EA1, EA2, EA3) for accessing a telecommunication network (WAN, RI) of an operator according to Claim 11.

13. Local network, called the shared network (RP'), **characterized in that** it is able to connect a plurality of devices implementing proxy modules (Px1, Px2, Px3) according to Claim 10.

14. System (SG, SG') for managing resources available to a plurality of equipments (EA1, EA2, EA3, EA1', EA2', EA3') for accessing a telecommunication network (WAN, RI) of an operator in response to a request to deliver a data stream, which request is transmitted by a terminal device (TU1) connected to a first accessing equipment (EA1, EA1') of said plurality of accessing equipments, **characterized in that** it comprises a local network, called the shared network (RP, RP'), according to either of Claims 12 and 13.

15. Computer program (Pg1, Pg2) comprising instructions for implementing the method for processing a request to deliver a multimedia stream according to one of Claims 1 to 5 or the method for managing delivery resources according to Claim 7.
